# EUROPEAN PATENT APPLICATION

(11) **EP 2 339 480 A1**
(43) Date of publication of application: **29.06.2011**
(21) Application number: 09179082.4
(22) Date of filing: 14.12.2009
(51) Int. Cl.: G06F 17/30, G06Q 10/00

(54) **Communication system for selecting a list of contacts belonging to a social network of a user**

(71) Applicant: Alcatel Lucent, 75008 Paris (FR)
(72) Inventor: Joly, Adrien, 91620, NOZAY (FR); Robinson, Julien, 91620, NOZAY (FR)
(74) Representative: Lebkiri, Alexandre

(57) **Abstract**

The present invention relates to a communication system (SYS) for selecting a list of contacts which information is enriched from at least one social network of a user. It is characterized in that said communication system (SYS) comprises:
- a first database associated to said user, said first database comprising :
- a list of classes (LCI);
- a set of attributes (SAtt) associated to each class of the list (LCI), said attributes being deduced from said social network (NTWS),
- a list of contacts (LCc) within the social network associated to each attribute, a weight (W) being associated to each contact (Cc) according to a correlation (Corr) between said contact (Cc) and said user, said correlation (Corr) being determined by the class of said attribute; and
- a selection service (SES) able to:
- receive a request comprising at least one keyword (K) related to a contact (Cc) of the user to be called, a keyword (K) being referenced with regards to an attribute;
- according to the request's keyword (K), select a list of ranking contacts (LrCc), the ranking depending on the weight (W) associated to each contact (Cc); and
- transmit a response comprising said selected list of ranking contacts (LrCc).

## Description

### FIELD OF THE INVENTION

The present invention relates to a communication system for selecting a list of contacts which information is enriched from at least one social network of a user.

Such a communication system may be used in any network system linked to a social network.

### BACKGROUND OF THE INVENTION

When a user wants to call one of his contacts via his mobile phone for example, he dials his phone number, search for his name through a classic address book, which is usually huge, assuming that there is an entry for this contact in his address book and that there is no ambiguity on names (e.g. several entries with a same first name). His mobile phone is used for selecting either a list of contacts by the phone number typed, or for selecting the whole address book.

One problem of this well-known prior art is that when the user doesn't remember the name of one of his contact (e.g. his doctor), or wants to contact a person whose phone number is missing in his address book, he can't call a contact.

### SUMMARY OF THE INVENTION

It is an object of the invention to provide a communication system for selecting a list of contacts which information is enriched from at least one social network of a user, which resolves the problem above- stated.

To this end, there is provided a communication system for selecting a list of contacts which information is enriched from at least one social network of a user, wherein said communication system comprises:
- a first database associated to said user, said first database comprising :
- a list of classes;
- a set of attributes associated to each class of the list, said attributes being deduced from said social network,
- a list of contacts within the social network associated to each attribute, a weight being associated to each contact according to a correlation between said contact and said user, said correlation being determined by the class of said attribute; and
- a selection service able to:
- receive a request comprising at least one keyword related to a contact of the user to be called, a keyword being referenced with regards to an attribute;
- according to the request's keyword, select a list of ranking contacts, the ranking depending on the weight associated to each contact; and
- transmit a response comprising said selected list of ranking contacts.

As we will see in further details, as the list of contacts selected in relation with the contact to be called is taken from a database whose data are deduced from the social network(s) of the user, said user doesn't need any more to know exactly the identity or the phone number of the contact he wants to call, said information being retrieved from the social network. He just has to enter a keyword which is related to the contact to be called.

In a first not limited embodiment, a class is a:
- a name;
- an organizational structure;
- a relational structure;
- a topic domain; or
- a current location.

It permits to predefine some associated attributes which are enriched from the social network and which might be often used by the user as well to call a person via some related keywords. According to a class, it also permits to define a correlation between the user and a contact which will be used to compute a weight and therefore to define a rank.

In a second not limited embodiment, the communication system further comprises a dictionary of keywords for each attribute. It permits to group together some words which are semantically or textually nearby, said words corresponding to an attribute.

In a third not limited embodiment, when the class is a name, the correlation between the contact and said user is a phonetic similarity. It permits to define a weight associated to a contact when the related attribute is within a name class.

In a fourth not limited embodiment, when the class is an organizational structure or a relational structure, the correlation between the contact and said user is a distance between said contact and said user within said structure. It permits to define a weight associated to a contact when the related attribute is within an organizational structure class, a relational structure class.

In a fifth not limited embodiment, when the class is a current location, the correlation is a distance between a contact's localization and said current location. It permits to define a weight associated to a contact when the related attribute is within a current location class.

In a sixth not limited embodiment, when the class is a topic domain, the correlation between the contact and said user is a frequency of appearances and/or a quantity of appearances within the social network of said topic domain for said contact, or involving the user and said contact. It permits to define a weight associated to a contact when the related attribute is within a topic domain class or an activity class.

In a seventh not limited embodiment, the communication system comprises a network server comprising said first database and said selection service. It permits the selection service to access directly to a database within the network server, the latter being able to access to the social network.

In an eight not limited embodiment, the communication system comprises a communication device comprising said first database and said selection service. It permits the selection service to access to a database within the communication device, which is faster than accessing a database within the network server, said communication device being able to access directly to the social network.

In a ninth not limited embodiment, the communication system comprises:
- a network server comprising said first database; and
- a communication device comprising said selection service and a second database, said second database comprising keywords referenced with regards to the attributes of the first database and their corresponding list of contacts, said lists of contacts being ranked according to the weight associated to each contact.

It permits the selection service to access to a second database within the communication device, which is faster than accessing a database within the network server and faster than accessing the social network via the communication device, while the network server comprising the database and is able to access directly to the social network.

In a tenth not limited embodiment, the communication device is further able to display said list of ranking contacts received, a contact being displayed with at least a first name, a last name, a social link between said contact and the user, and a key performance factor. It permits to display useful information for the user about the contacts in the list of ranking contacts displayed.

In an eleventh not limited embodiment, the communication system further comprises an updating service for creating and updating said first database, and wherein said updating service is able to:
- create a list of classes for said user;
- create a set of attributes for each class of the list, said attributes being deduced from said social network;
- associate to each attribute a list of contacts within the social network, a weight being associated to each contact according to a correlation between said contact and said user, said correlation being determined by the class of said attribute.

It permits to create the database independently of the requests of the communication device.

In a twelfth not limited embodiment, the updating service is further able to update the list of contacts associated to the set of attributes and their associated weight when at least one information of a contact is updated in the social network. It permits to be up to date regarding the information of each contact within the social network.

In a thirteenth not limited embodiment, the updating service is further able to send a query to the second database hosted in the communication device to synchronize the lists of ranking contacts with the corresponding lists of contacts and their associated weight of the first database. It permits to be up to date in the communication device regarding the database within the network server.

In addition, there is provided a computer program product for a computer, comprising a set of instructions, which when loaded into said computer, causes the computer to implement the communication system according to any one of the previous characteristics.

### BRIEF DESCRIPTION OF THE FIGURES

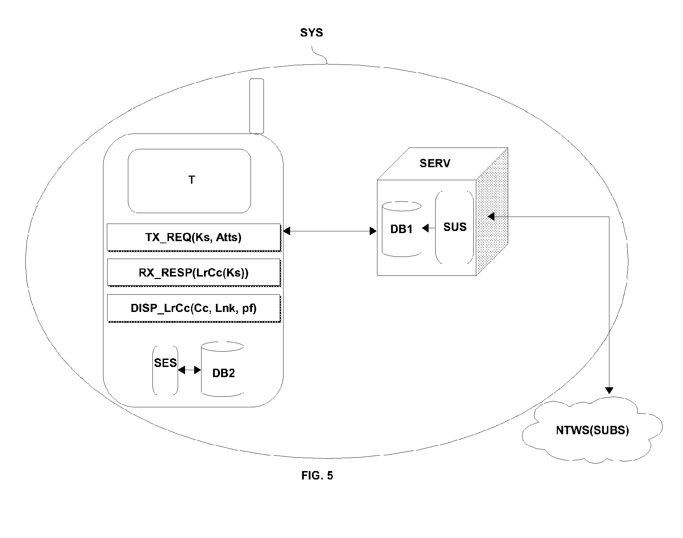

Some embodiments of methods and/or apparatus in accordance with embodiments of the present invention are now described, by way of example only, and with reference to the accompanying drawings, in which:
- Fig.1 is a schematic diagram of a communication system for selecting a list of contacts comprising a selection service, according to a not limited embodiment of the invention;
- Fig.2 is a schematic diagram of the communication system for selecting a list of contacts of Fig.1 further comprising an updating service;
- Fig.3 illustrates a first not limited embodiment of the communication system for selecting a list of contacts of Fig. 1 and Fig. 2;
- Fig.4 illustrates a second not limited embodiment of the communication system for selecting a list of contacts of Fig. 1 and Fig. 2;
- Fig.5 illustrates a third not limited embodiment of the communication system for selecting a list of contacts of Fig. 1 and Fig. 2;
- Fig.6 illustrates a schematic diagram of a first database comprised within the communication system of Fig. 1 to Fig. 5, said first database comprising a list of classes and associated set of attributes;
- Fig.7 illustrates schematically a first set of attributes, associated to a class name, and their associated list of contacts within the communication system of Fig. 1 to Fig. 5;
- Fig.8 illustrates schematically a second set of attributes, associated to a class organizational structure, and their associated list of contacts within the communication system of Fig. 1 to Fig. 5;
- Fig.9 illustrates schematically a third set of attributes, associated to a class relational structure, and their associated list of contacts within the communication system of Fig. 1 to Fig. 5;
- Fig.10 illustrates schematically a fourth set of attributes, associated to a class topic domain, and their associated list of contacts within the communication system of Fig. 1 to Fig. 5;
- Fig.11 illustrates schematically sixth set of attributes, associated to a class current location, and their associated list of contacts within the communication system of Fig. 1 to Fig. 5;
- Fig.12 illustrates a schematic diagram of a second database comprised within a communication device of the communication system

of Fig. 5, said second database comprising a list of keywords and associated list of ranking contacts;

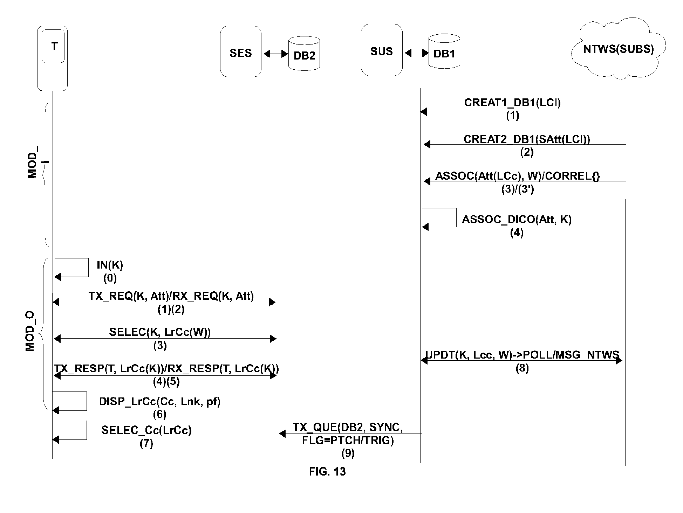

- Fig.13 illustrates a schematic diagram of an initial mode and of an operational mode of the third not limited embodiment of the communication system of Fig. 5; and

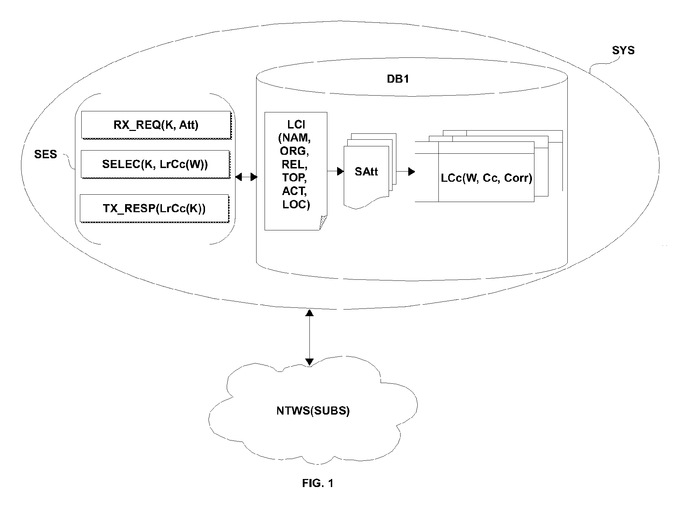

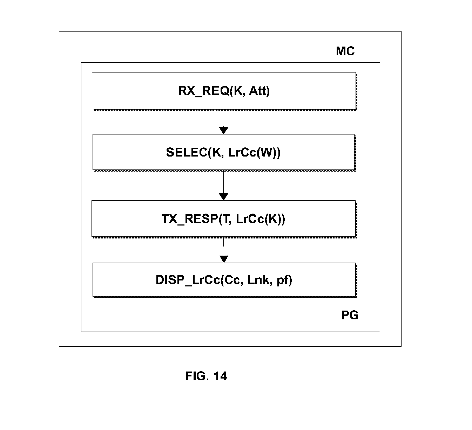

- Fig. 14 illustrates a schematic graph of a communication method for selecting a list of contacts which is carried out by the communication system of Fig. 1 to Fig. 5.

### DESCRIPTION OF EMBODIMENTS OF THE INVENTION

In the following description, well-known functions or constructions by the man skilled in the art are not described in detail since they would obscure the invention in unnecessary detail.

The present invention relates to a communication system for selecting a list of contacts which information is enriched from at least one social network of a user. It is to be noted that the term user referred to a social network user.

Such a communication system SYS is illustrated in Fig.1. It comprises:
- a first database DB1 associated to said user SUBS, said first database DB1 comprising :
- a list of classes LCI;
- a set of attributes SAtt associated to each class of the list LCI, said attributes being deduced from said social network NTWS,
- a list of contacts LCc within the social network NTWS associated to each attribute Att, a weight W being associated to each contact Cc according to a correlation Corr between said contact Cc and said user SUBS, said correlation Corr being determined by the class CI of said attribute Att; and
- a selection service SES able to:
- receive a request REQ comprising at least one keyword K related to a contact Cc of the user SUBS to be called, a keyword K being referenced with regards to an attribute Att (RX_REQ(K, Att);

- according to the request's keyword K, select a list of ranking contacts LrCc, the ranking depending on the weight W associated to each contact Cc (SELEC(K, LrCc(W)); and
- transmit a response RESP comprising said selected list of ranking contacts LrCc (TX_RESP(LrCc(K))).

Said communication system is able to cooperate with at least one social network NTWS from which information of the list of contacts LCc of the user SUBS is retrieved. One social network NTWS is described hereinafter in a not limited example.

In not limited examples, as illustrated in Fig. 1, a class CI is a:
- a name NAM ;
- an organizational structure ORG ;
- a relational structure REL ;
- a topic domain TOP ;
- a current location LOC.

In a not limited embodiment, when the class CI is a name NAM, the correlation Corr between the contact Cc and said user SUBS is a phonetic similarity.

In not limited embodiment, when the class CI is an organizational structure ORG or a relational structure REL, the correlation Corr between the contact Cc and said user SUBS is the distance D between said contact and said user within said structure or from said current location. The current location represents the location where the user SUBS is.

In a not limited embodiment, when the the class CI is a current location LOC, the correlation Corr is a distance between a contact's localization and said current location.

In a not limited embodiment, when the class Cc is a topic domain TOP, the correlation Corr between the contact Cc and said user SUBS is a frequency Fq of appearances and/or a quantity occ of appearances within the social network NTWS of said topic domain of the contact, or involving the user and said contact.

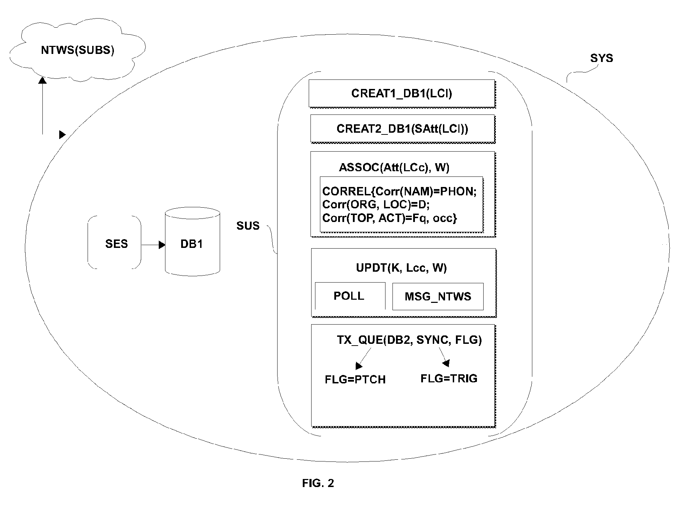

In a not limited embodiment, as illustrated in Fig. 2, the communication system SYS further comprises an updating service SUS for creating and updating said first database DB1, and wherein said updating service is able to:
- create a list of classes CI for said user SUBS (CREAT1_DB1 (LCI));
- create a set of attributes SAtt for each class of the list LCI, said attributes being deduced from said social network NTWS (CREAT2_DB1 (SAtt(LCI)));
- associate to each attribute Att a list of contacts LCc within the social network NTWS, a weight W being associated to each contact Cc according to a correlation Corr between said contact Cc and said user SUBS, said correlation Corr being determined by the class CI of said attribute Att (ASSOC(Att(LCc), W).

In a not limited embodiment, the updating service SUS is further able to create a dictionary DICO of keywords K for each attribute Att (CREAT_DICO(Att, K)).

In a not limited embodiment, the updating service SUS is further able to update the list of contacts LCc associated to the set of attributes SAtt and their associated weight W when at least one information of a contact Cc is updated in the social network NTWS (UPD(K, LCc, W).

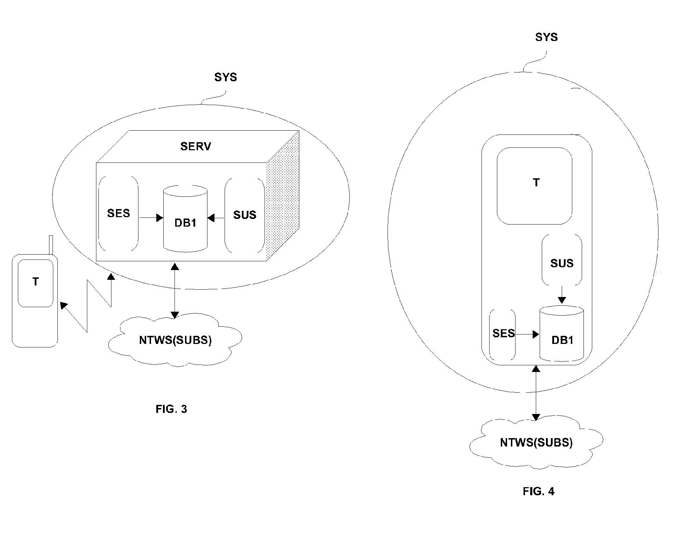

In a first not limited embodiment, illustrated in Fig. 3, the communication system SYS comprises a network server SERV comprising said first database DB1 and said selection service SES. Said network server SERV is owned by an operator which the user has subscribed to the services. Furthermore, said network server SERV comprises said updating service SUS and accesses directly to the social network NTWS of the user SUBS.
In this embodiment, the communication device T transmits to the selection service SES of the network server SERV a request REQ comprising at least one keyword K related to a contact Cc of the user SUBS to be called, a keyword K being referenced with regards to an attribute Att.

In a second not limited embodiment, illustrated in Fig. 4, the communication system SYS comprises a communication device T comprising said first database DB1 and said selection service SES. Said communication device T is used by the user SUBS to call his contacts and is managed by an operator which the user has subscribed to the services. Furthermore, said communication device T comprises said updating service SUS and accesses directly to the social network NTWS of the user SUBS. In this embodiment, the communication device T transmits to its selection service SES a request REQ comprising at least one keyword K related to a contact Cc of the user SUBS to be called, a keyword K being referenced with regards to an attribute Att.

In a third not limited embodiment, illustrated in Fig. 5, the communication system SYS comprises:
- a network server SERV comprising said first database DB1; and
- a communication device T comprising said selection service SES and a second database DB2, said second database DB2 comprising:
- keywords K referenced with regards to the attributes Att of the first database DB1; and
- their corresponding list of contacts LrCc, said lists of contacts being ranked according to the weight W associated to each contact Cc.

In this embodiment, said network server SERV is owned by an operator which the user has subscribed to the services and it accesses directly to the social network NTWS of the user SUBS. Furthermore, in this third not limited embodiment, the network server SERV comprises said updating service SUS.

For the description below the third not limited embodiment of the communication system SYS is described.

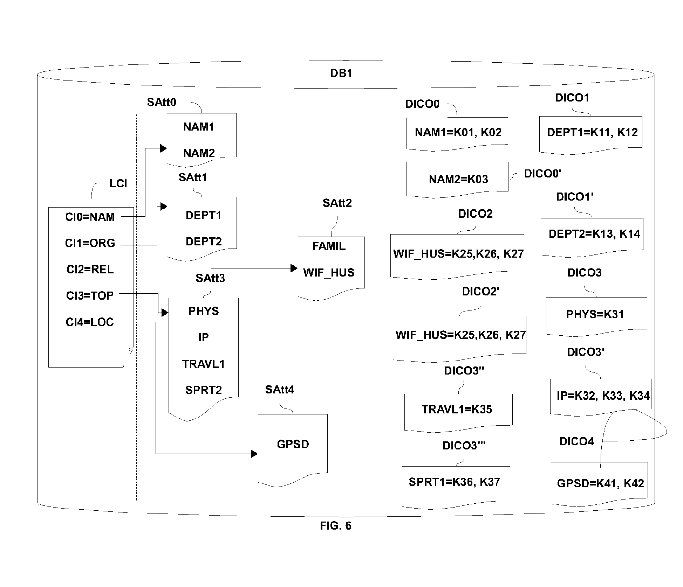

The following not limited example is taken as illustrated in Fig. 6.
- A) the network server SERV comprises a first database DB1, as illustrated in Fig. 6, which comprises:
- a list of classes LCI with:
   o a first class CI0 which is a name NAM.
   o a second class CI1 which is an organizational structure ORG;
   o a third class CI2 which is a relational structure REL;
   o a fourth class CI3 which is a topic domain TOP; and
   o a fifth class CI4 which is which is a current location LOC.
- a set of attributes SAtt associated to each class CI above-mentioned respectively with:
   o A first set of attributes SAtt0 representing a first name NAM1 and a second name NAM2. In not limited examples, the name may be a first name, a surname, a last name;
   o A second set of attributes SAtt1 representing a first department DEPT1 and a second department DEPT2;
   o A third set of attributes SAtt2 representing a family relational structure FAMIL, and a wife and husband relational structure WIF_HUS;
   o A fourth set of attributes SAtt3 representing a physic domain PHYS, an intellectual property domain IP, a travel activity TRAVL1 and a sport activity SPRT2;
   o A fifth set of attributes SAtt5 representing a localization GPSD;
- a list of contacts LCc associated to each attribute Att above-mentioned respectively.

Said attributes are deduced from the social network NTWS of the user SUBS.

Hence, in not limited embodiments:
o The first name NAM1 and the second name NAM2 are in the form of a set of vectors, one for each contact, said vector comprising a first name, a last name, a surname.
o The first department DEPT1 and a second department DEPT2 are in the form of a graph with semantic links Ink between the different persons within said graph. For example, a person is the manager of another person.
o The family relational structure FAMIL, and the wife and husband relational structure WIF_HUS are also in the form of a graph with semantic links Ink between the different persons within said graph. For example, a person is the wife of another person.
O The physic domain PHYS, the intellectual property domain IP, the travel activity domain TRAVL1 and the sport activity domain SPRT2 are in the form of a set of vectors, one for each contact, said vector comprising the name of the contact, the frequency Fq of appearances and/or the quantity occ of appearances within the social network of said topic of a contact, or involving the user and a contact;
o A localizations GPSD are in the form of a set of vectors, one for each contact, said vector comprising the name of the contact, his localization, and some contextual information such as in a not limited example an URI ("Universal Resource identifier") of typical location points (supermarket, parking, monument ...) nearby said contact. It is to be noted that the localization may come from a satellite localization such as GPS™, an antenna positioning via GSM, WIFI, RFID, Bluetooth™ technologies etc.

In a not limited embodiment, the first database DB1 further comprises a dictionary DICO of keywords K for each attribute Att, as illustrated in Fig. 6. Hence, in not limited examples, the first database DB1 comprises:
- a) a dictionary DICO0 for the attribute NAM1 with the keywords K01=AI; K02=Ally;
- b) a dictionary DICO0' for the attribute NAM2 with the keywords K03=Yvon;
- c) a dictionary DICO1 for the attribute DEPT1 with the keywords K11=manager; K12=colleagues;
- d) a dictionary DICO1' for the attribute DEPT2 with the keywords K13=manager; K14=colleagues;
- e) a dictionary DlC02 for the attribute FAMIL with the keywords K21 =wife; K22=father; K23=mother; K24=daughter;
- f) a dictionary DICO2' for the attribute WIF_HUS with the keywords K25=wife; K26=spouse; K27=mate;
- g) a dictionary DIC03 for the attribute PHYS with the keywords K31 =physics;
- h) a dictionary DIC03' for the attribute IP with the keywords K32=patent; K33=trademark; K34=licensing;
- i) a dictionary DIC03" for the attribute TRAVEL1 with the keywords K35=mexico;
- j) a dictionary DICO3''' for the attribute SPRT1 with the keywords K36=mounting; K37=climbing;
- k) a dictionary DIC04 for the attribute GPSD with the keywords K41 =supermarket; K42=town hall.

It is to be noted that of course, depending of the attributes used and their associated dictionaries, a same keyword may be found in a plurality of dictionaries. For example, a keyword "town hall" may be comprised in the dictionary DC04, and in another dictionary DICO3''' (not illustrated) related to a topic domain attribute (if there are some contacts who speak about a town hall subject in the social network).

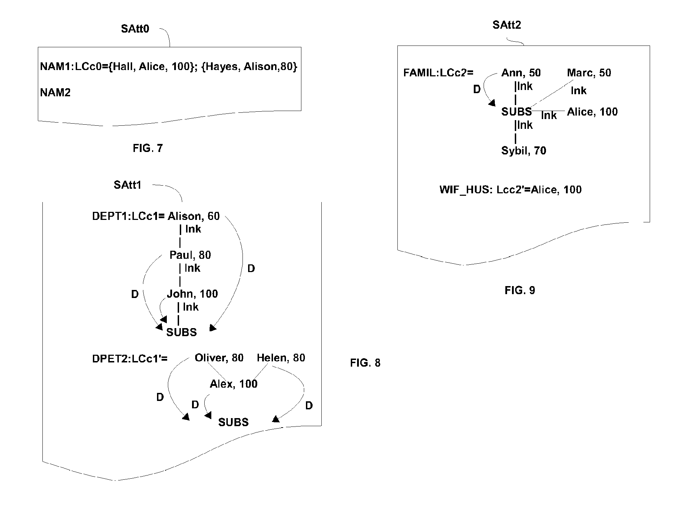

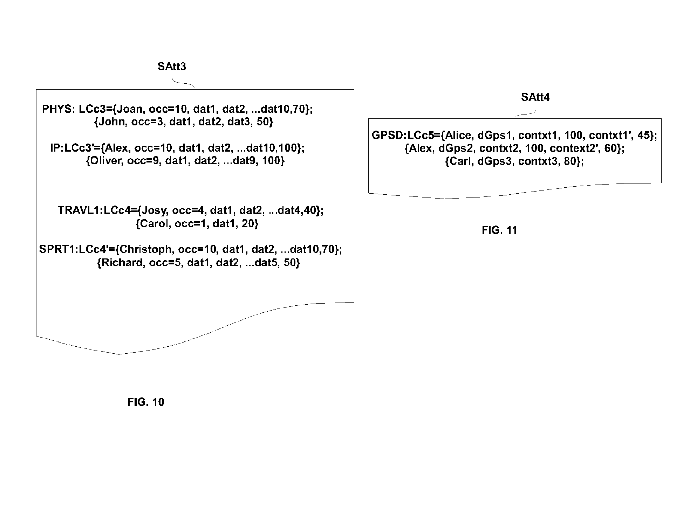

The Fig. 7 to 11 illustrate in not limited examples the lists of contacts LCc which are associated to the different attributes Att (by means of the associated keywords K) and the weighed W associated to each contact in the list LCc.
- a) For the attribute NAM1, the associated list LCc0 comprises two vectors {Hall, Alice, 100}; {Hayes, Alison, 80}, 100 and 80 being the weight W associated to the name of the contact Hall and Hayes respectively.
- b) For the attribute NAM2, there is no contact within a social network of the user which has the name of Yvon.
- c) For the attribute DEPT1, the associated list LCc1 comprises a graph with the contacts Alison, Paul, John, and the user SUBS and their associated weight respectively 60, 80, 100 which correspond to the correlation distance D between the contact and the user SUBS. The highest the distance D is, the smallest the weight W is. For the sake of simplification, not all the distances D have been illustrated in Fig. 8.

The semantic links Ink may be in not limited examples:
o Alison is the director of the department DEPT1;
o Paul is the manager of John;
o John is the manager of the user SUBS.
   - d) The same reasoning applied with the attribute DEPT2 and its associated list LCc1'.
   - e) For the attribute FAMIL, the associated list LCc2 comprises a graph with the contacts Sybil, Ann, Alice, Marc, and their associated weight respectively 70, 50, 100, 50 which correspond to the correlation distance D between the contact and the user SUBS. The highest the distance D is, the smallest the weight W is. For the sake of simplification, not all the distances D have been illustrated in Fig. 9.

The semantic links Ink may be in not limited examples:
o Sybil is the daughter of the user SUBS;
o Alice is the wife of the user SUBS;
o Ann and Marc are the mother and the father of the user SUBS.
   - f) For the attribute WIF_HUS, the associated list LCc2' comprises a unique contact Alice and its weight 100 which corresponds to the correlation distance d between said contact and the user SUBS. The semantic link Ink may be in a not limited example Alice is the wife of the user SUBS.
   - g) For the attribute PHYS, the associated list LCc3 comprises a set of vectors with the contacts Joan and John, and their associated:
o frequency Fq of appearances respectively which is the dates of appearances dat1, dat2...
o quantity of appearances respectively occ=10, occ=3;
o weight respectively 70 and 50 which correspond to the correlation frequency Fq and/or quantity occ, either of the contact itself, either involving the user SUBS and the contact. The highest the frequency and/or quantity of appearances is, the highest the weight W is.

When it involves the user SUBS and the contact Cc, this means that the contact Joan and the user SUBS have more discussions about the subject physic than the contact John and the user SUBS together.
- h) The same reasoning applied with the attribute IP and its associated list LCc3'.
- i) The same reasoning applied with the attribute TRAVL1 and its associated list LCc3".
- j) The same reasoning applied with the attribute SPRT1 and its associated list LCc3'''.
- k) For the attribute GPSD, the associated list LCc4 comprises a set of vectors with the contacts Alice, Alex, Carl, and their associated:
   o Localization (positioning coordinates for example), named respectively dGps1, dPgs2, dGps3 of said contacts ;
   o Their contextual information :
      ■ For Alice: contxt1 and contxt1' (for example the URI of the parking where Alice is and the localization coordinates of the supermarket nearby) with their weight 100 and 45 respectively. It means that Alice is far from the supermarket as the weight is of 45 ;
      ■ For Alex: contxt2 and contxt2' (for example the URI of the monument visited by Alex and the localization coordinates of the town hall nearby) with their weight 100 and 60 respectively;
      ■ For Carl: contxt3 (for example the URI of the supermarket where Carl is parked) with its weight 80.

It is to be noted that in a not limited embodiment, this list LCc4 of contacts is composed of all the contacts of the user SUBS found on the social network NTWS whose at least localization coordinates are available.

A weight is determined according to a correlation which is a distance between the contact's localization (positioning coordinates) and said current location.

It is to be noted that the user will type a keyword K corresponding to a localization attribute corresponding to the current location class. The nearest a contact is positioned from the current location, the highest the weight W is.

- B) The communication device T used by the user is a mobile phone. Said mobile phone comprises the selection service SES as described previously, and the second database DB2. It further comprises each dictionary DICO of keywords K associated to each attribute. In a not limited example, said dictionaries are saved in the second database DB2.

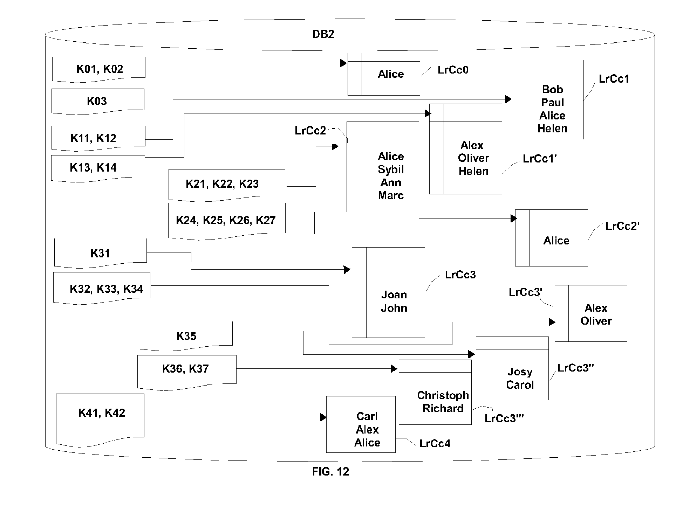

Thus, said second database DB2 comprises as illustrated in Fig. 12:
- Keywords K referenced with regards to the attributes Att of the first database DB1; and
- Their corresponding list of contacts LrCc, said lists of contacts being ranked according to the weight W associated to each contact Cc.
- For the dictionary DICO0, the associated list of ranking contacts LrCc0 with Alice;
- For the dictionary DICO0', no associated list of ranking contacts;
- For the dictionary DICO1, the associated list of ranking contacts LrCc1 with in the following order Bob, Paul, Alice, Helen;
- For the dictionary DICO1', the associated list of ranking contacts LrCc1' with in the following order Alex, Oliver, Helen;
- For the dictionary DlCO2, the associated list of ranking contacts LrCc2 with in the following order Alice, Sybil, Ann, Marc;
- For the dictionary DlC02', the associated list of ranking contacts LrCc2' with Alice;
- For the dictionary DIC03, the associated list of ranking contacts LrCc3 with in the following order Joan and John;
- For the dictionary DIC03', the associated list of ranking contacts LrCc3' with in the following order Alex, Oliver;
- For the dictionary DlCO3", the associated list of ranking contacts LrCc3" with in the following order Josy and Carol;
- For the dictionary DICO3''', the associated list of ranking contacts LrCc3''' with in the following order Christoph and Richard;
- For the dictionary DlCO4, the associated list of ranking contacts LrCc4 with in the following order Carl, Alex, Alice.

The communication system SYS operates according to two modes. During an initial mode MOD_I the first database DB1 is created, whereas during an operational mode MOD_O, the first database DB1 is used. These two modes are described hereinafter. Reference to Fig. 13 is made.

### • Initial mode MOD I

Such initial mode MOD_I may be performed after the user SUBS subscribes to a telephone subscription proposed by an operator. The subscription implies the agreement of the user SUBS to give the operator the social network(s) which he is a member of. Hence, the operator may connect to the social network(s) with his network server SERV to retrieve information on the contacts of the user SUBS, which information is enriched from said social network(s).

When the subscription is performed, the updating service SUS of the communication system SYS may perform the following steps as illustrated in Fig. 13.

**In a first step 1),** one creates the list of classes CI for said user SUBS. In the not limited example given, the list of classes LCI is the one illustrated in Fig. 6 and above described.

**In a second step 2),** one creates the set of attributes SAtt for each class of the list LCI, said attributes being deduced from said social network NTWS. In the not limited example given, the attributes Att are those illustrated in Fig. 6 and above described.

In order to deduce some attributes Att from a social network, one may use the application programming interface API of said social network. Hence, information of the contacts Cc of the user SUBS retrieved from the social network NTWS or from the user SUBS himself may be used to deduce the attributes, such as in not limited example:
- information provided by the users' contacts (user profiles, contextual updates);
- interactional information between the user and his contacts (communication history/logs);
- information annotated by the user (through tagging for example) etc.

In a not limited example, one uses the REST API ("Representation Rest transfer"). In the not limited example of the social network Facebook™, one may use the following functions of the associated REST API to retrieve some information of the contacts of the user or of the user himself:
- Users.getInfo() which returns a wide array of user-specific information for each user identifier passed, limited by the view of the current user;
- status.get() which returns the user's current and most recent statuses which correspond to some personal short shared messages;
- notes.get() which returns a list of all of the visible notes written by the specified user;
- message.getThreadsInFolder() which returns all of a user's messages and threads from the Inbox;
- comments.get() which returns all comments for a given identifier posted through;
- groups.get() which returns all visible groups according to the filters specified;
- friends.get() which returns the identifiers for the current user's social network friends;
- links.get() which returns all links the user has posted on his profile etc.

In a not limited embodiment, the deduction of the attributes Att are performed from the information retrieved from the social network. Hence, in a not limited example, from the messages of a user, one may identifies the frequency of the words within said messages, and one may deduce a plurality of attributes from the most frequently used words. Hence, in a not example, the topic physics may appears frequently within said messages. Thus, a topic domain attribute PHY may be deduced.

**In a third step 3)**, one associates to each attribute Att a list of contacts LCc within the social network NTWS, a weight W being associated to each contact Cc according to a correlation Corr between said contact Cc and said user SUBS, said correlation Corr being determined by the class CI of said attribute Att.

It is to be noted that during this step the correlation between said contact Cc and said user SUBS is performed (sub-step 3': CORELL() as illustrated in Fig. 13).

In the not limited example given, the list of contacts LCc associated to the attributes Att and their weight are those illustrated in Fig. 7 to Fig. 12 and above described.

**In a fourth step 4),** one associates a dictionary DICO of keywords to each attribute Att. It permits to be up to date regarding the information of each contact within the social network. In the not limited example given, the dictionaries DICO are those illustrated in Fig. 6 and above described.

Thus, said dictionaries DICO are composed of taxonomies and ontologies. A provider of such taxonomies and ontologies may be in a not limited example Wordnet™. Hence, for the word "spouse", such provider will provide the keywords K: partner, married person, mate, better half for example.

Of course, in a not limited embodiment, these dictionaries may be enriched by other means or other persons. It is to be noted that for the sake of simplification, in the not limited example above given, only the words spouse, mate and wife have been used.

Hence, it is to be noted that in a not limited embodiment, the keywords associated to an attribute is a set of words composed of nouns which are grouped into sets of cognitive synonyms. Said cognitive synonyms are interlinked by means of semantic and lexical relations, which are defined by the associated attribute.

It is to be noted that this step 4) may be performed in parallel with the step 3).

In the third not limited embodiment of the communication system SYS where it comprises a network server SERV and a communication device T, said dictionaries are saved within the network server SERV.

### • Operational mode MOD O

When a user SUBS, for example Bob, wants to call one of his contacts, which is a person of his family for example, the followed operations are performed, as illustrated in Fig. 13.

**In an initial step 0),** (named IN(K) in Fig. 13), via his mobile phone, he types the term "father" or he says the term "father" through a voice-speaker. Of course, in a not limited embodiment, a function may be used which proposes the user some keywords K as the user goes along with the typing. For example, if the user begins to type the letter f, the function proposes him the keywords father or friend (if they exist in a dictionary).

**In a first step 1)**, the mobile phone T transmits to the selection service SES a request REQ comprising at least one keyword K related to a contact Cc of the user SUBS to be called, said keyword being referenced with regards to an attribute Att.

In the not limited example, the attribute Att is the term family FAMIL. Thus, the class is the relational class CI2. The keyword, which has been typed by Bob, is K22=father and the contact to be called is Marc.

**In a second step 2),** the selection service SES receives said request REQ comprising at least said keyword K22 related to said contact Marc of the user SUBS to be called, the keyword K22 being referenced with regards to the attribute FAMIL.

**In a third step 3),** according to the request's attribute FAMIL, the selection service SES selects a list of ranking contacts LrCc, the ranking depending on the weight W associated to each contact Cc. In the third not limited embodiment of the communication system SYS taken as example, the selection is performed in the second database DB2.

In the not limited example, the selected list of ranking contacts LrCc is the list LrCc2 as illustrated in Fig. 13, where the ranking list comprises the contacts Alice, Sybil, Ann, Marc.

In a not limited embodiment, the list of ranking contacts LrCc2 is saved in the second database DB2 by decreasing weight.

**In a fourth step 4)**, the selection service SES transmits a response RESP comprising said selected list of ranking contacts LrCc2 to said mobile phone T.

**In a fifth step 5)**, the mobile phone T receives from the selection service SES said response RESP comprising said selected list of ranking contacts LrCc2.

**In a sixth step 6),** the mobile phone T displays said list of ranking contacts received LrCc2, a contact Cc being displayed with at least a first name, a last name, a social link Lnk between said contact Cc and the user SUBS, and a key performance factor pf.

In a not limited embodiment, the surname of a contact Cc is also displayed.

In a not limited embodiment, the list of ranking contacts LrCc2 is displayed by decreasing weight as following.

The first contact Alice is displayed with:
- her name, last name, surname
- the social link with Bob, which is the wife
- a key performance factor pf which explained why Alice is displayed. Here, this is Bob' wife.

Then, the second contact Sybil is displayed with:
- her name, last name, surname
- the social link with Bob, which is the daughter
- a key performance factor pf which explained why Sybil is displayed. Here, this is Bob's daughter.

Then, the third contact Ann is displayed with:
- her name, last name, surname
- the social link with Bob, which is the mother
- a key performance factor pf which explained why Ann is displayed. Here, this is Bob's mother.

Then, the fourth contact Marc is displayed with:
- his name, last name, surname
- the social link with Bob, which is the father
- a key performance factor pf which explained why Marc is displayed. Here, this is Bob's father.

**In a seventh step 7),** (named SELEC_Cc(LrCc) in Fig. 13), the user SUBS selects in the displayed ranking list of contacts, the contact Marc.

It is to be noted that during this operational mode MOD_O, in a not limited embodiment, the updating service SUS is further able to update the list of contacts LCc associated to the set of attributes SAtt, and their associated weight W when at least one information of a contact Cc is updated in the social network NTWS. This embodiment is illustrated in Fig. 13 as step 8 UPDT(K, Lcc, W)). It is to be noted that this updating step is performed independently from the steps 0) to 7) above-mentioned in the operational mode. Hence, for example, if the manager of Bob corresponding to the attribute department DEPT1 has changed, the associated list of contact LCc1 is updated in the first database DB1 of the communication system SYS. In not limited variants of said embodiment, either the communication system SYS perform a polling (POLL as illustrate in Fig.2 and Fig. 14) to the social network NTWS in order to know if there is an information I of a contact Cc which has been modified in said social network NTWS, either the social network NTWS send a message to the communication system SYS whenever an information I of a contact Cc has been modified in said social network NTWS. This last variant may be called a pull mode.

In the third not limited embodiment of the communication system SYS where it comprises a network server and a communication device T, in a first not limited embodiment, the updating service SUS is further able to send a query QUE to the second database DB2 hosted in the communication device T to synchronize the lists of ranking contacts LrCc with the corresponding lists of contacts LCc and their associated weight W of the first database DB1 (TX_QUE(DB2, SYNC, FLG) as illustrated in Fig. 13). It is to be noted that this updating step is performed independently from the steps 0) to 7) above-mentioned in the operational mode. In a not limited embodiment, the protocol SIP or XMPP may be used to send such query QUE. In not limited variants of said embodiment, either the query QUE comprises and update patch PTCH, said patch comprising the updated information I, either the query QUE triggers the communication device T to retrieve an update patch for the information I from the network server SERV. These two variants may be called a push mode. In a not limited example, a flag FLG may be used to indicate the use of the first not limited variant FLG=PTCH or the second not limited variant FLG=TRIG, as illustrated in Fig. 13.

Of course, in a second not limited embodiment, a polling by the communication device T may also be performed. In this case, the communication device comprises a step of sending a refresh query to the network server SERV to launch the synchronization.

Hence, as may be understood from above, a communication method MC, as illustrated in Fig. 14, for selecting a list of contacts which information is enriched from at least one social network NTWS of a user SUBS, is carried out by the network server SERV in the case of the first not limited embodiment of the communication system SYS, or by the communication device T in the case of the second not limited embodiment and third not limited embodiment of the communication system SYS. Said communication method MC comprises the steps of:
- receiving a request REQ comprising at least one keyword K related to a contact Cc of the user SUBS to be called, a keyword K being referenced with regards to an attribute Att, a set of attributes SAtt being associated to each class of a list of classes LCI, said attributes being deduced from said social network NTWS (step RX_REQ(K, Att)); and
- according to the request's keyword K, selecting a list of ranking contacts LrCc, the ranking depending on a weight W associated to each contact Cc, a list of contacts LCc within the social network NTWS being associated to each attribute Att and a weight W being associated to each contact Cc according to a correlation Corr between said contact Cc and said user SUBS, said correlation Corr being determined by the class CI of said attribute Att (step SELEC(K, LrCc(W)); and
- transmitting a response RESP comprising said selected list of ranking contacts LrCc (step TX_REP(T, LrCc(K)).

In a not limited embodiment, said communication method MC further comprises the step of displaying said list of ranking contacts received LrCc, a contact Cc being displayed with at least a first name, a last name, a social link between said contact Cc and the user SUBS, and a key performance factor pf (step DISP_LrCc(Cc, Lnk, pf)).

It is to be understood that the present invention is not limited to the aforementioned embodiments and variations and modifications may be made without departing from the scope of the invention. In the respect, the following remarks are made.

It is to be understood that the present invention is not limited to the aforementioned application. It is to be understood that the present invention is not limited to the aforementioned embodiments. For example, other class may be included in the list of class CI. For example, the communication device T may be implemented in a computer, offering thereby the user a way to call a contact via his computer. Hence, in a not limited embodiment, the selection service SES is able to receive a request REQ comprising a plurality of keywords K, and to transmit a combined list of ranking contacts LrCc, the ranking according to the plurality of keywords being determined according to the different weights W associated to a contact Cc (when said contact is comprised within the different list associated respectively to the different keywords). It permits a user to use a plurality of keywords in relation with a contact to be called. Therefore, the ranking takes into account the different weights of a contact if a plurality of weights is associated to said contact. For example, when the user types the keywords K11= manager and K31 = physics, a combined list will be created with the contacts of the list associated to each keyword K11 and K31. Hence, said combined list comprises the contacts Alison, Paul, John and Joan. The result ranking combined list comprises the contacts in the following order with their associated weight:
- John, 150 (the sum of the weights coming from the list LCc1 and LCc3),
- Paul, 80,
- Joan, 70
- Alison, 60.

For example, the user may use a keyboard on his communication device T or he may use a voice-speaker to provide a keyword K to a request REQ to be sent to the selection service SES. In this latter case, the communication device T will offer some adequate voice recognition. For example, the list of keywords associated to an attribute may be enriched from the user himself. When the user types a keyword which doesn't not exist in a dictionary, said keyword, may be taken into account. For example, if the user types the URI of a post office, as it is not in the dictionary DIC04, it may be automatically added.

It is to be understood that the methods and the elements according to the invention are not limited to any implementation. There are numerous ways of implementing functions of the communication method MC by means of items of hardware or software, or both, provided that a single item of hardware or software can carry out several functions. It does not exclude that an assembly of items of hardware or software or both carry out a function. Said hardware or software items can be implemented in several manners, such as by means of wired electronic circuits or by means of a computer program product that is suitable programmed respectively. A computer program product can be contained in a computer or in a network server SERV or in a communication device T, said network server SERV or communication device T comprising a unit control, said unit control being hardware or software items as above stated. The computer program product comprises a set of instructions. Thus, said set of instructions contained, for example, in a computer programming memory or in a network server SERV or in a communication device T, may cause the computer or the network server or communication device T to carry out the different steps of the communication method MC. Thus, said set of instructions contained, for example, in a computer programming memory may cause the computer to implement the communication system SYS.

The set of instructions may be loaded into the programming memory by reading a data carrier such as, for example, a disk. A service provider can also make the set of instructions available via a communication network such as, for example, the Internet.

Hence, some embodiments of the invention may comprise one or a plurality of the following advantages:
- it provides an intuitive way for a user to look up contacts with :
- maximal coverage (i.e. it does not only include contacts from the telephone's addressbook);
- it requires minimal manipulation (i.e. the user can provide details that he has in mind, without having to look up additional information himself before calling the contact);
- it improves precision (i.e. the user can add specific keywords to filter the list of resulting contacts);
- it provides the user a ranking list of contacts to facilitate afterwards the choice of the contact to call;
- it permits to adapt the list of contacts displayed by the communication device to the evolution of the contacts within the user's social network(s) as the list will be up to date;
- it is simple to implement.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. Communication system (SYS) for selecting a list of contacts which information is enriched from at least one social network (NTWS) of a user (SUBS), wherein said communication system (SYS) comprises :
- a first database (DB1) associated to said user (SUBS), said first database (DB1) comprising :
- a list of classes (LCI);
- a set of attributes (SAtt) associated to each class of the list (LCI), said attributes being deduced from said social network (NTWS),
- a list of contacts (LCc) within the social network (NTWS) associated to each attribute (Att), a weight (W) being associated to each contact (Cc) according to a correlation (Corr) between said contact (Cc) and said user (SUBS), said correlation (Corr) being determined by the class (CI) of said attribute (Att); and
- a selection service (SES) able to:
- receive a request (REQ) comprising at least one keyword (K) related to a contact (Cc) of the user (SUBS) to be called, a keyword (K) being referenced with regards to an attribute (Att);
- according to the request's keyword (K), select a list of ranking contacts (LrCc), the ranking depending on the weight (W) associated to each contact (Cc); and
- transmit a response (RESP) comprising said selected list of ranking contacts (LrCc).

2. Communication system (SYS) according to claim 1, wherein a class (CI) is a :
- a name (NAM) ;
- an organizational structure (ORG) ;
- a relational structure (REL) ;
- a topic domain (TOP) ; or
- a current location (LOC).

3. Communication system (SYS) according to any one of the previous claims, wherein it further comprises a dictionary (DICO) of keywords (K) for each attribute (Att).

4. Communication system (SYS) according to any one of the previous claims, wherein when the class (CI) is a name (NAM), the correlation (Corr) between the contact (Cc) and said user (SUBS) is a phonetic similarity.

5. Communication system (SYS) according to any one of the previous claims, wherein when the class (CI) is an organizational structure (ORG) or a relational structure (REL), the correlation (Corr) between the contact (Cc) and said user (SUBS) is a distance (D) between said contact and said user within said structure.

6. Communication system (SYS) according to any one of the previous claims, wherein when the class (CI) is a current location (LOC), the correlation (Corr) is a distance between a contact's localization and said current location.

7. Communication system (SYS) according to any one of the previous claims, wherein when the class (Cc) is a topic domain (TOP), the correlation (Corr) between the contact (Cc) and said user (SUBS) is a frequency (Fq) of appearances and/or a quantity (occ) of appearances within the social network (NTWS) of said topic domain for said contact, or involving the user and said contact.

8. Communication system (SYS) according to any one of the previous claims, wherein it comprises a network server (SERV) comprising said first database (DB1) and said selection service (SES).

9. Communication system (SYS) according to any one of the previous claims 1 to 7, wherein it comprises a communication device (T) comprising said first database (DB1) and said selection service (SES).

10. Communication system (SYS) according to any one of the previous claims 1 to 7, wherein it comprises :
- a network server (SERV) comprising said first database (DB1); and
- a communication device (T) comprising said selection service (SES) and a second database (DB2), said second database (DB2) comprising keywords (K) referenced with regards to the attributes (Att) of the first database (DB1) and their corresponding list of contacts (LrCc), said lists of contacts being ranked according to the weight (W) associated to each contact (Cc).

11. Communication system (SYS) according to any one of the previous claims 9 or 10, wherein the communication device (T) is further able to display said list of ranking contacts received (LrCc), a contact (Cc) being displayed with at least a first name, a last name, a social link between said contact (Cc) and the user (SUBS), and a key performance factor (pf).

12. Communication system (SYS) according to any one of the previous claims, wherein it further comprises an updating service (SUS) for creating and updating said first database (DB1), and wherein said updating service (SUS) is able to:
- create a list of classes (CI) for said user (SUBS);
- create a set of attributes (SAtt) for each class of the list (LCI), said attributes being deduced from said social network (NTWS);
- associate to each attribute (Att) a list of contacts (LCc) within the social network (NTWS), a weight (W) being associated to each contact (Cc) according to a correlation (Corr) between said contact (Cc) and said user (SUBS), said correlation (Corr) being determined by the class (CI) of said attribute (Att).

13. Communication system (SYS) according to the preceding claim, wherein the updating service (SUS) is further able to update the list of contacts (LCc) associated to the set of attributes (SAtt) and their associated weight (W) when at least one information of a contact (Cc) is updated in the social network (NTWS).

14. Communication system (SYS) according to any one of the previous claims 12 or 13, wherein the updating service (SUS) is further able to send a query (QUE) to the second database (DB2) hosted in the communication device (T) to synchronize the lists of ranking contacts (LrCc) with the corresponding lists of contacts (LCc) and their associated weight (W) of the first database (DB1).

15. A computer program product for a computer, comprising a set of instructions, which when loaded into said computer, causes the computer to implement the communication system (SYS) according to any one of the previous claims.
